**Europäisches Patentamt**

**European Patent Office**

**Office européen des brevets**

(19)

(11) Veröffentlichungsnummer: **0 144 819**
**B1**

(12) # EUROPÄISCHE PATENTSCHRIFT

(45) Veröffentlichungstag der Patentschrift:
**22.04.87**

(51) Int. Cl.⁴: **A 47 J 41/02,** B 65 D 47/24

(21) Anmeldenummer: **84113692.2**

(22) Anmeldetag: **13.11.84**

(54) Isolierkanne, ~~deren~~ Öffnung durch einen Verschlussschieber verschliessbar ist.

(30) Priorität: **23.11.83 DE 3342356**
**27.01.84 DE 3402894**
**02.04.84 DE 3412210**

(43) Veröffentlichungstag der Anmeldung:
**19.06.85 Patentblatt 85/25**

(45) Bekanntmachung des Hinweises auf die Patenterteilung:
**22.04.87 Patentblatt 87/17**

(84) Benannte Vertragsstaaten:
**AT BE CH DE FR GB IT LI LU NL SE**

(56) Entgegenhaltungen:
**DE - A - 2 054 275**
**DE - A - 2 152 725**
**DE - B - 1 679 126**
**DE - C - 21 390**
**US - A - 2 059 932**
**US - A - 2 143 250**
**US - A - 2 172 142**

(73) Patentinhaber: **Rotpunkt Dr. Anso Zimmermann,**
**Industriestrasse, D-6434 Niederaula / Bad Hersfeld (DE)**

(72) Erfinder: **Zimmermann, Anso, Dr., Seilerweg 34,**
**D-6430 Bad Hersfeld (DE)**

(74) Vertreter: **Körber, Wolfhart, Dr. et al, Patentanwälte**
**Dipl.-Ing. H. Mitscherlich Dipl.-Ing. K. Gunschmann**
**Dr.rer.nat. W. Körber Dipl.Ing. J. Schmidt-Evers Dipl.-Ing.**
**W. Melzer Steinsdorfstrasse 10,**
**D-8000 München 22 (DE)**

**Beschreibung**

Die Erfindung bezieht sich auf eine Isolierkanne nach dem Oberbegriff des Anspruchs 1.

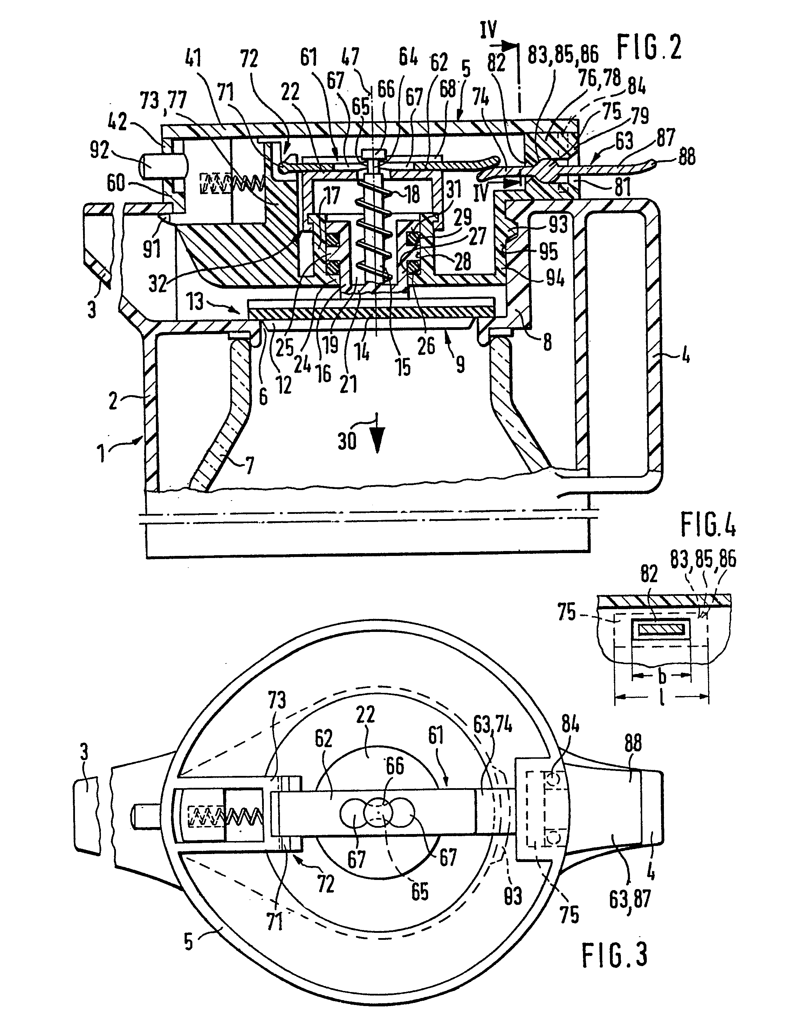

Eine Isolierkanne dieser Art ist in der DE-OS 2 152 725 beschrieben und dargestellt. Bei dieser bekannten Isolierkanne ist der Öffnung ein Verschlussschieber zugeordnet, der zwischen einer Schliessstellung und einer Offenstellung verschiebbar ist. Hierzu dient eine in den Verschlussschieber einfassende Gewindespindel, die zur Oberseite des Deckels herausgeführt und mit einer ausserhalb des Deckels befindlichen Handhabe in Form eines Drehknopfes verbunden ist (vgl. Fig. 2). Als Deckel ist ein solcher in verhältnismässig flacher Ausgestaltung vorgesehen. Der den Verstellmechanismus aufnehmende Hohlraum im Deckel wird dadurch gebildet, dass der hohle Drehknopf gegenüber dem Deckel domförmig erhöht bzw. hochgezogen ist. Hierdurch ist eine verhältnismässig grosse Bauweise der Handhabe vorgegeben, die sich lediglich für einen Drehknopf eignet, wie er bei dieser bekannten Ausgestaltung auch verwendet wird.

Bei der bekannten Isolierkanne bedarf es zum Schliessen bzw. Öffnen der Öffnung einer verhältnismässig unbequemen Betätigung des Drehknopfes. Darüberhinaus ist aufgrund des Vorhandenseins eines Spindeltriebs, mit dem verhältnismässig grosse Kräfte übertragen werden können, eine unsachgemässe Behandlung durch Überbelastung nicht auszuschliessen, die zu einer Beschädigung der Dichtflächen am Verschluss oder des Verstellgewindes führen kann.

Der Erfindung liegt die Aufgabe zugrunde, eine Isolierkanne der eingangs bezeichneten Art so zu verbessern, dass bei Gewährleistung einer einfachen Bauweise eine einfache Handhabung zum Öffnen und Schliessen der Öffnung bei Einhandbedienung bei Vermeidung einer unsachgemässen Behandlung möglich ist.

Diese Aufgabe wird durch die kennzeichnenden Merkmale des Anspruchs 1 gelöst.

Bei der erfindungsgemässen Lösung erfolgt das Schliessen der Öffnung automatisch durch eine Federkraft, deren Grösse vorbestimmt werden kann und die dann immer gleich ist. Bei der Vorbestimmung können die vorhandenen Werkstoff-Eigenschaften, die erwünschte Flächenpressung am Verschluss und auch ein zu erwartender Dampfdruck Berücksichtigung finden, so dass die Schliesskraft mit der der Verschlussschieber die Öffnung schliesst, optimal bemessen werden kann. Dabei erfolgt die Rückführung des Verschlussschiebers in seine Schliessstellung automatisch durch die Feder, so dass es keines manuellen Vorschubs des Verschlussschiebers in seine Schliessstellung bedarf. Es ist allenfalls eine Auslösung der automatischen Bewegung des Verschlussschiebers in seine Schliessstellung denkbar.

Ein weiterer wesentlicher Vorteil der erfindungsgemässen Ausgestaltung besteht darin, dass die Öffnung durch Einhandbedienung, also mit der Hand, die die Isolierkanne beim Ausgiessen hält, geöffnet und geschlossen werden kann. Dies ist möglich, weil die Handhabe bis in den Fingerabstandsbereich des Henkels reicht. Deshalb kann die Handhabe mit einem Finger der Bedienungshand, beispielsweise durch eine Druckausübung mit dem Daumen, in einfacher und bedienungsfreundlicher Weise betätigt werden.

Dabei zeichnet sich die erfindungsgemässe Ausgestaltung durch eine einfache und vorteilhafte Bauweise aus, bei der die Feder und der den Hebel aufweisende Verstellmechanismus unsichtbar im Hohlraum zwischen dem Oberteil und dem Unterteil des Deckels angeordnet sind. Die erfindungsgemässe Ausgestaltung ermöglicht in einfacher Weise Kraftübersetzungen, die zur Bediedungsfreundlichkeit beitragen. Dabei kann ein erfindungsgemässer Hebel im Verstellmechanismus sowohl auf der dem Hebel abgewandten Seite des Deckels als einarmiger Hebel als auch auf der dem Henkel zugewandten Seite des Deckels als zweiarmiger Hebel gelagert sein. Hierzu ist die vorhandene Schliessrichtung des Verschlussschiebers zu berücksichtigen. Es lassen sich auch Lösungen verwirklichen, bei denen zwei Hebel zusammenwirken. Bei einer solchen Ausgestaltung kann die Wirkrichtung geändert werden, und es sind auch Lagerungspunkte für einen dieser beiden Hebel auf der dem Henkel abgewandten Seite des Deckels möglich (vgl. Ansprüche 7 und 8).

Die Ausgestaltung nach Anspruch 2 ist in baulicher Hinsicht einfach und vorteilhaft. Sie ermöglicht ein einfaches Verschliessen der Öffnung, beispielsweise durch Auflage des Verschlussschiebers auf dem Rand der Öffnung.

Wenn der Verschlussschieber mit der Öffnung der Isolierkanne zusammenwirkt, die zugleich auch Füllöffnung ist, können sich je nach Konstruktion der Isolierkanne Schwierigkeiten beim Ausgiessen der Flüssigkeit ergeben, die dadurch bedingt sind, dass die Flüssigkeit durch einen schmalen, sichelförmigen Spalt strömen muss und deshalb unerwünschte Turbulenzen der ausfliessenden Flüssigkeit nicht auszuschliessen sind. Bei der Ausgestaltung nach Anspruch 3 sind solche unerwünschten Turbulenzen ausgeschlossen, weil der besondere Ausgiesskanal im Deckel ein strömungsgünstiges Ausfliessen der Flüssigkeit ermöglicht. Ausserdem ist es möglich, den z.B. runden Querschnitt des Ausgiesskanals eindeutig vorzubestimmen, so dass beim Ausgiessen eine kontrollierte Menge der Flüssigkeit ausfliesst. Auch dies ist zur Verhinderung von Strömungsturbulenzen beim Ausfliessen von Bedeutung. Dabei ist es von Vorteil, die zum Kanneninnenraum weisende Mündung des Ausgiesskanals nahe am Rand der Öffnung, also auf der dem Henkel abgewandten bzw. dem Giesser zugewandten Seite, anzuordnen, damit die Restflüssigkeit aus der Isolierkanne leichter ausgegossen werden kann.

Im Rahmen der Erfindung ist es auch möglich, die Schliessbewegung des Verschlussschiebers senkrecht nach unten zu richten. Eine solche Ausgestaltung ist möglich, wenn der Verschlussschieber in einem hohlen Deckel angeordnet und gegen den Deckelboden zwecks Abdichtung des Ausgiesskanals schiebbar ist.

Wenn die Handhabe des Verstellmachsnimsus gemäss Anspruch 5 seitlich aus dem Deckel herausgeführt ist, lässt sie sich in einfacher Weise zu einer Position direkt oberhalb des Henkels führen, wo sie sehr handhabungsfreundlich von einem Finger der Bedienungshand, z.B. dem Daumen, erreicht werden kann.

Es ist jedoch auch möglich, die Handhabe gemäss Anspruch 6 oberhalb des Deckels auf der dem Henkel zugewandten Seite anzuordnen. Auch bei einer solchen Ausgestaltung ist die Handhabe bequem durch einen Finger der Bedienungshand zu erreichen.

Es ist vorteilhaft, den Verschlussschieber um seine Achse drehbar und bevorzugt von mit seinem Schaft lösbar im Deckel zu lagern. Die Drehbarkeit ist insbesondere für einen Schraubdeckel von Vorteil, weil beim Aufschrauben des Deckels und bei Kontakt des Verschlussschiebers mit dem Rand der Öffnung der Verschlussschieber an der Drehung des Deckels nicht teilnimmt. Andernfalls müsste der Verschlussschieber auf dem Rand der Öffnung gleiten.

Bei der Ausbildung nach Anspruch 10 wird die Ringdichtung von der Federkraft belastet. Dies führt in zweifacher Weise zu einer verbesserten Abdichtung, weil durch die Federkraft sowohl die axiale als auch die radiale Dichtungswirkung der Ringdichtung aufgrund vergrösserter Spannung verbessert wird.

Es ist auch vorteilhaft, den Hohlraum des Deckels nicht nur im Bereich der Durchführung für den Verschlussschieber sondern auch gemäss Anspruch 11 im Bereich der Durchführung für die Handhabe abzudichten.

Nachfolgend werden drei Ausführungsbeispiele der Erfindung anhand einer vereinfachten Zeichnung beschrieben. Es zeigt:

Fig. 1 eine Isolierkanne im vertikalen Querschnitt als erstes Ausführungsbeispiel;

Fig. 2 eine Isolierkanne im vertikalen Querschnitt als zweites Ausführungsbeispiel;

Fig. 3 die Isolierkanne nach Fig. 2 ohne Deckeloberteil in der Draufsicht;

Fig. 4 einen Teilschnitt nach Linie IV-IV in Fig. 2;

Fig. 5 eine Isolierkanne im vertikalen Querschnitt als drittes Ausführungsbeispiel;

Fig. 6 eine in Fig. 5 mit X gekennzeichnete Einzelheit;

Fig. 7 eine andere Ausführungsform für eine Dichtungsanordnung für einen Ausgiesskanal gemäss Fig. 5.

Bei allen drei Ausführungsbeispielen handelt es sich jeweils um eine allgemein mit 1 bezeichnete Isolierkanne mit einem Schutzgehäuse 2, an das einstückig ein Giesser 3 und ein Henkel 4 angeformt sind, mit einem Deckel 5, mit dem eine Öffnung 6 verschliessbar ist, und mit einem Isoliereinsatz 7, der in bekannter Weise dichtend gegen die Unterseite eines Stutzens 8 des Schutzgehäuses 2 gespannt ist.

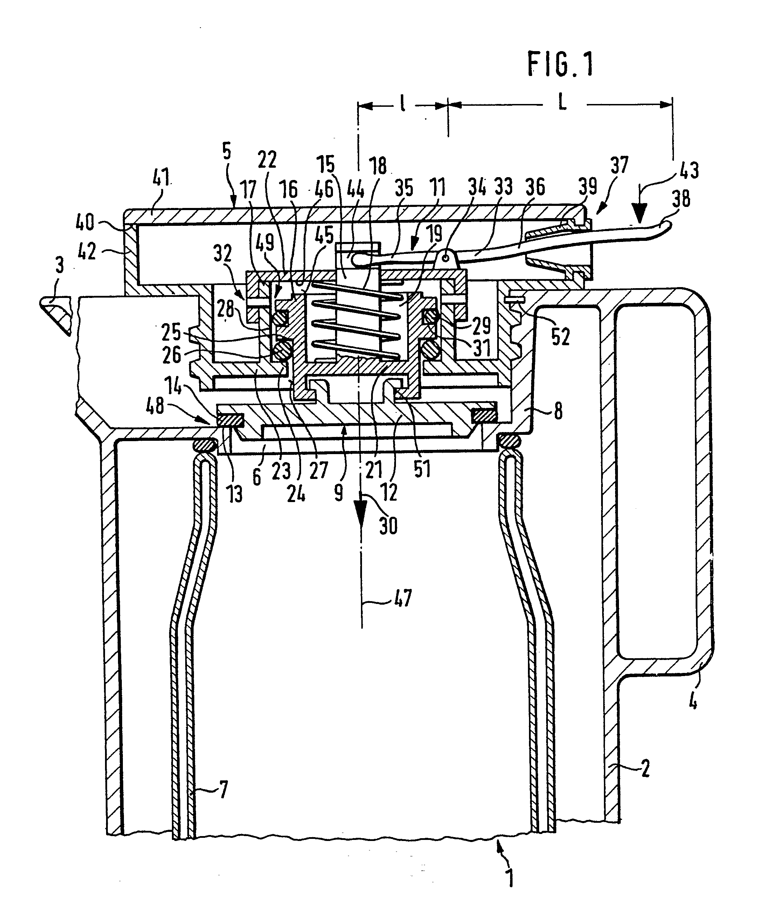

Beim ersten Ausführungsbeispiel gemäss Fig. 1 ist der Deckel 5 ein sogenannter Schraubdeckel, der von oben in den Stutzen 8 einschraubbar ist. Die Öffnung 6 ist in der dargestellten Position durch einen Verschlussschieber 9 verschlossen, der im Deckel 5 vertikal geführt ist und mittels eines allgemein mit 11 bezeichneten Verstellmechanismus zwischen der dargestellten Schliessstellung und einer Öffnungsstellung verschiebbar ist. Der Verschlussschieber 9 besteht aus einer Ventilplatte 12, die eine mit dem Öffnungsrand 13 zusammenwirkende Flachdichtung 14 trägt, und einem Schaft 15, der mittelbar durch einen ihn umgebenden Führungsring 16 in einem deckelseitigen, äusseren Führungszylinder 17 vertikal verschiebbar geführt ist.

Der Verschlussschieber 9 ist durch eine Druckfeder 18 in Richtung auf den Öffnungsrand 13 vorgespannt, die in einem sich zwischen dem Schaft 15 und dem Führungsring 16 befindlichen Hohlraum 19 angeordnet ist und sich verschlussschieberseitig an einem Boden 21 des Schaftes 15 und deckelseitig an einem Widerlager 22 abstützt. Die Ausschubbewegung des Verschlussschiebers 9 wird durch einen vom Deckelboden 23 gebildeten Anschlag 24 begrenzt, der mit einer Schulter 25 des Führungsringes 16 zusammenwirkt. Zwischen dem Anschlag 24 und der Schulter 25 ist eine Ringdichtung 26 angeordnet, die mit ihrem inneren Umfang eine zylindrische Fläche 27 des Führungsringes 16 und mit ihrem äusseren Umfang die Führungsfläche 28 des deckelseitigen Führungszylinders 17 berührt. In der ausgeschobenen Stellung des Verschlussschiebers 9, die sich dann einstellt, wenn der Deckel 5 ausgeschraubt ist, wird die Ringdichtung 26 durch die Kraft der Druckfeder 18 zusammengepresst, so dass in dieser Position des Verschlussschiebers eine erhöhte Abdichtung gegeben ist.

Zusätzlich kann eine zweite Ringdichtung 29 vorgesehen sein, die in einer Ringnut 31 des Führungsringes 16 angeordnet ist und an der Führungsfläche 28 des deckelseitigen Führungszylinders 17 anliegt.

Das Widerlager 22 für die Druckfeder 18 umgreift ringförmig den Führungszylinder 17 und ist durch einen andeutungsweise nur durch zwei Stifte dargestellten Bajonettverschluss 32 am Führungszylinder 17 festlegbar. Dabei liegt das Widerlager 22 auf der Stirnseite des Führungszylinders 17 auf.

Der allgemeinen mit 11 bezeichnete Verstellmechanismus wird durch einen zweiarmigen Hebel 33 gebildet, der in einem vom Widerlager 22 getragenen Lager 34 schwenkbar gelagert ist und einen am Schaft 15 des Verschlussschiebers 9 angreifenden kurzen Hebelarm 35 und einen langen Hebelarm 36 aufweist, der eine seitliche Durchführungsöffnung 37 im Deckel 5 durchfasst und mit dem aus dem Deckel 5 herausragenden Ende eine Handhabe 38 bildet. In der Durchführungsöffnung 37 ist eine den Hebelarm 36 umschliessende Dichtungsmanschette 39 angeordnet. Das Verhältnis der Hebelarmlängen L : 1 = etwa 3 : 1.

Zwecks Erleichterung der Montage des Verstellmechanismus 11 besteht der Deckel 5 aus einem Deckeloberteil 41 und einem Deckelunterteil 42, die in nicht dargestellter Weise miteinander dichtend verbunden sind, z.B. geklebt, verrastet oder geschweisst. Die Teilungsfuge 40 verläuft durch die Durchführungsöffnung 37.

Um die Flüssigkeit aus der Isolierkanne 1 auszugiessen, bedarf es eines Druckes in Richtung des Pfeiles 43 auf die Handhabe 38. Dabei wird aufgrund der Mitnahmeverbindung des in eine Nut 44 im Schaft 15 eingreifenden kurzen Hebelarms 35 der Verschlussschieber 9 entgegen seiner Schliessrichtung 30 nach oben verschoben, und zwar so weit, bis sich die Oberseite 45 des Führungsringes 16 gegen die Unterseite 46 des Widerlagers 22 stösst. Solange ausgegossen werden soll, muss der Druck auf die Handhabe 38 aufrechterhalten werden, was leicht und bequem durch den Daumen der in den Henkel 4 einfassenden Bedienungshand ausgeführt werden kann. Sobald die Handhabe 38 losgelassen wird, schliesst der Verschlussschieber 9 die Öffnung 6 automatisch, indem er durch die Kraft der Druckfeder 18 heruntergeschoben wird, so dass die etwa rechtwinklig zur Mittelachse 47 gerichteten Dichtungsflächen 48 am Öffnungsrand 13 und an der Flachdichtung 14 aufeinandertreffen. Die Vorspannung der Druckfeder 18 ist unter Berücksichtigung der Werkstoffeigenschaften so gross bemessen, dass bei zu erwartendem Dampfdruck bei der Einfüllung heisser Flüssigkeiten der Verschlussschieber 9 geschlossen bleibt.

Der Verschlussschieber 9 ist in seiner allgemein mit 49 bezeichneten Vertikalführung oder aufgrund einer zwischen dem Schaft 15 und der Ventilplatte 12 angeordneten, gegebenenfalls einrastbaren Formschlussverbindung 51 um die Mittelachse 47 des Deckels 5 bzw. der Isolierkanne 1 frei drehbar. Deshalb kann beim Aufschrauben bzw. Abschrauben des Deckels 5 der Verschlussschieber 9 in seiner Kontaktstellung mit dem Öffnungsrand 13 verbleiben, bis er vom Öffnungsrand 13 abhebt.

Um bei einem ungeschickten Druck auf die Handhabe 38 mit einer in Öffnungsrichtung des Deckels 5 gerichteten Kraftkomponente zu vermeiden, dass der Deckel 5 sich öffnet, ist dem Deckel 5 in seiner dargestellten Verschlussstellung eine Verrastung zugeordnet, die durch eine bevorzugt lösbare Verdrehsicherung beispielsweise in Form eines im Schutzgehäuse 2 sitzenden Verrastungsstiftes 52 gebildet ist, der in einer Ausnehmung des Deckels 5 eintaucht und am Anfang der Öffnungsbewegung des Deckels 5 einen nicht dargestellten Druckpunkt überfährt.

Beim zweiten Ausführungsbeispiel gemäss Fig. 2 bis 4 ist der Deckel 5 ein sogenannter Verrastungsdeckel, dessen Funktion noch beschrieben wird.

Der beim zweiten Ausführungsbeispiel allgemein mit 61 bezeichnete Verstellmechanismus wird durch einen einarmigen Hebel 62 und einen zweiarmigen Hebel 63 gebildet. Der einarmige Hebel 62 ist in seinem mittleren Bereich dadurch mit dem Schaft 15 verbunden, dass er einem verjüngten Abschnitt 64 des Schaftes 15 in einer Ausnehmung 65 aufnimmt. Dabei ist der einarmige Hebel 62 zwischen einem Kopf 66 des Schaftes 15 und einer nicht bezeichneten Schulter längs der Achse 47 des Deckels 5 bzw. des Verschlussschiebers 9 festgelegt. Die Ausnehmung 65 geht auf beiden Seiten in vergrösserte Öffnungen 67 über, die ein leichtes und schnelles Einstecken bzw. Herausführen des Schaftes 15 ermöglichen. Der einarmige Hebel 62 ist in einer Nut 68 in der Oberseite des Widerlagers 22 aufgenommen, das, wie schon beim ersten Ausführungsbeispiel, durch einen allgemein mit 32 bezeichneten Bajonettverschluss am äusseren Führungszylinder 17 festlegbar ist.

Am einen Ende des einarmigen Hebels 62 ist eine horizontal verlaufende Schwenkachse 71 ausgebildet, die in aufwärts offenen Lageraugen 72 eines deckelseitigen Lagers 73 gelagert ist. Die Lageraugen 72 weisen im einzelnen nicht dargestellte Verrastungskanten im Bereich eines Schlitzes auf, der schmaler bemessen ist als die Schwenkachse 71. Beim Herausziehen der Schwenkachse 71 aus den Lageraugen 72 bedarf es deshalb einer bestimmten Kraftanstrengung. Mit seinem freien Ende übergreift der einarmige Hebel 62 den inneren Hebelarm 74 des zweiarmigen Hebels 63, der ebenfalls eine Schwenkachse 75 aufweist, mit der er in noch zu beschreibender Weise in einem Lager 76 gelagert ist. Sowohl das Lager 73 als auch das Lager 76 sind in einstückig im Deckel 5 angeformten inneren Materialansätzen 77, 78 ausgebildet.

Der zweiarmige Hebel 63 durchfasst die Wand 79 des hohlen Deckels 5 in einer Lagertasche 81, an die sich einwärts ein Durchbruch 82 anschliesst, der oben und unten schiessschartenförmig erweitert ist, um bei einem ausreichenden Schwenkwinkel eine möglichst grosse Lagerfläche 83 zu erhalten. Die Anordnung ermöglicht ein Einstecken des zweiarmigen Hebels 63 von aussen. Die Anlage der Schwenkachse 75 an der Lagerfläche 83 ist durch Sicherungsstifte 84 gewährleistet, die sich auf der Aussenseite der Schwenkachse 75 senkrecht im Materialansatz 78 erstrecken.

Aus der Fig. 4 ist deutlich zu entnehmen, dass die Lagerfläche 83 eine mit 85 bezeichnete ringförmige Dichtfläche bildet, was deshalb möglich ist, weil die Schwenkachse 75 länger bemessen ist (1) als die Breite b des Durchbruches 82 und beiderseits über den Durchbruch 82 hinausragt. Diese Dichtfläche 85 gewährleistet eine sichere Abdichtung des Durchbruches 82, wenn die Schwenkachse 75 mit ihrer zylindrischen Aussenfläche 86 an der Lagerfläche 83 bzw. der Dichtfläche 85 anliegt.

Der äussere Hebelarm 87 des zweiarmigen Hebels 63 bildet eine Handhabe 88, mit der der Verschlussschieber 9 entgegen der Kraft der Druckfeder 18, also auch entgegen der Schliessrichtung 30, angehoben werden kann, und zwar durch senkrechtes Herunterdrücken der Handhabe 88. Sobald die Handhabe 88 losgelassen wird, drückt die Druckfeder 18 den Verschlussschieber 9 wieder in seine dargestellte Verschlussstellung zurück (Schliessrichtung 30).

Wie schon beim ersten Ausführungsbeispiel besteht auch beim zweiten Ausführungsbeispiel der Deckel 5 aus einem Deckeloberteil 41 und einem Deckelunterteil 42, die in nicht dargestellter Weise, z.B. durch dichtes Verrasten, Kleben oder Schweissen, aneinander lösbar oder unlösbar befestigt sind. Hierdurch ist die Montage bzw. Demontage des Verstellmechanismus 61 im hohlen Deckel 5 gewährleistet.

Zum Entfernen des Deckels 5 von der Isolierkanne 1 ist eine giesserseitige, radial verschiebliche Verrastungsnase 91 durch Druck auf eine Taste 92 einzuschieben und der Deckel 5 giesserseitig anzuheben, so dass eine griffseitige Verrastungsnase 93 freigesetzt und der Deckel 5 mit seinem unterseitigen Ansatz 94 aus einer ihn aufnehmenden Ausnehmung 95 des Schutzgehäuse 2 abgehoben werden kann.

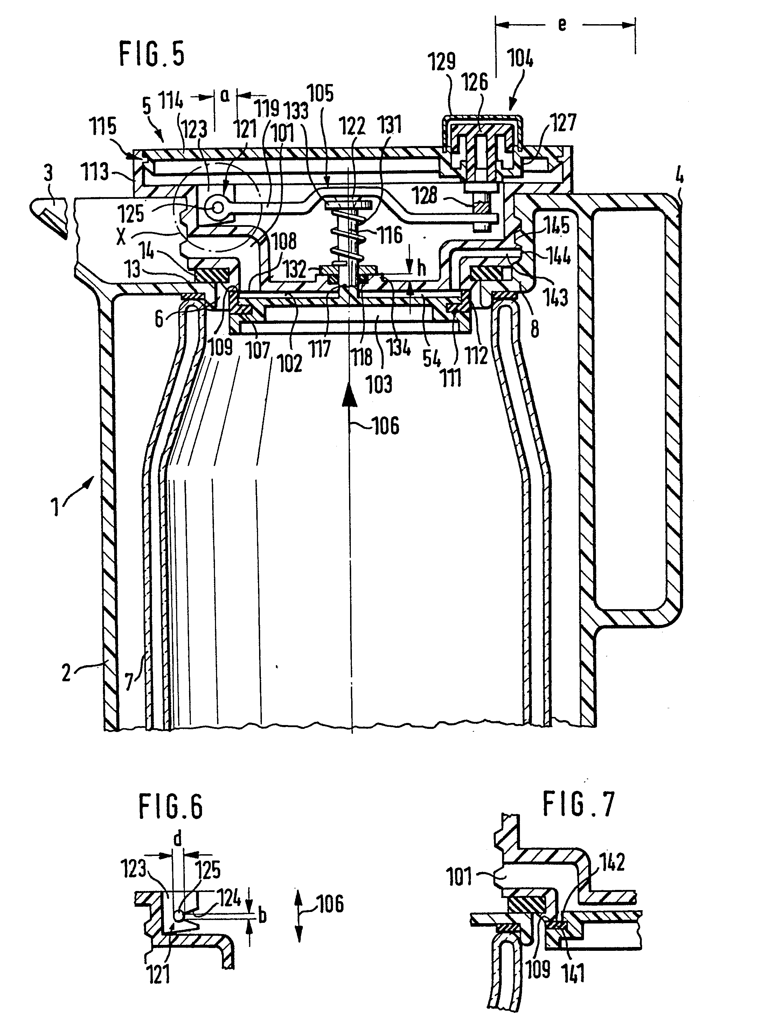

Beim dritten Ausführungsbeispiel gemäss Fig. 5 bis 7 ist — wie schon beim ersten Ausführungsbeispiel — der Deckel 5 ein sogenannter Schraubdeckel, der von oben in den Stutzen 8 einschraubbar ist, und in der dargestellten Position die Öffnung 6 mittels einer flachen Ringdichtung 14 verschliesst. Dabei drückt die Ringdichtung 14 auf den Öffnungsrand 13.

Im Deckel 5 ist ein die Abdichtung der Öffnung 6 umgehender Ausgiesskanal 101 angeordnet, der radial aus dem in den Stutzen 8 eingeschraubten Teil des Deckels 5 mündet, und zwar auf der zum Giesser 3 weisenden Seite des Deckels 5, wenn dieser sich in der dargestellten Verschlussstellung befindet. Einwärts mündet der Ausgiesskanal 101 an der Unterseite 102 des Deckels 5. Der Ausgiesskanal 101 ist durch einen Verschlussschieber 103 zu öffnen und zu schliessen, der durch eine allgemein mit 104 bezeichnete Handhabe am Deckel 5 und einen allgemein mit 105 bezeichneten Verstellmechanismus im Deckel 5 zu öffnen bzw. zu schliessen ist.

Die mit 106 bezeichnete Schliessrichtung des Verschlussschiebers 103 ist aufwärts gerichtet und somit den Schliessrichtungen beim ersten und zweiten Ausführungsbeispiel entgegengesetzt.

In der dargestellten Position befindet sich der Verschlussschieber 103 in seiner Verschlussstellung, d.h., er liegt mit einer Ringdichtung 107 an der Unterseite 102 des Deckels 5 an, wobei die Mündung 108 des Ausgiesskanals 101 innerhalb der Ringdichtung 107 angeordnet ist.

Es ist von Bedeutung, dass die Mündung 108 so dicht wie möglich auf der zum Giesser 3 weisenden Seite am Öffnungsrand 13 liegt. In Fig. 5 ist deutlich zu erkennen, dass sich zwischen der Mündung 108 und dem Öffnungsrand 13 im wesentlichen nur die notwendige Dichtungsfläche 109 für den Verschlussschieber 103 erstreckt. Die vorgeschriebene Anordnung der Mündung 108 ist deshalb von Bedeutung, weil mit grösser verwendem Abstand a zwischen der Mündung 108 und dem Öffnungsrand 13 das Ausgiessen der Restflüssigkeit aus der Isolierkanne 1 schwerer wird, und zwar deshalb, weil die Isolierkanne 1 umso mehr gekippt werden muss, um die Restflüssigkeit auslaufen lassen zu können, je grösser der Abstand a ist.

Die Ringdichtung 107 ist im Querschnitt winkelförmig mit einem in eine Ringnut des Verschlussschiebers 103 einfassenden Dichtungssteg 111 und einem sich axial erstreckenden Dichtungssteg 112, der mit der Dichtungsfläche 109 an der Unterseite 102 des Deckels 5 zusammenwirkt. Diese Ausgestaltung ist nicht nur vorteilhaft, weil der Dichtungssteg 112 gut dichtet, sondern er kann auch verhältnismässig dünn bemessen werden, so dass ein möglichst kleiner Abstand a verwirklicht werden kann.

In der Öffnungsstellung ist der Verschlussschieber 103 um ein bestimmtes Mass nach unten verschoben, so dass bei entsprechender Kippung der Isolierkanne 1 die Flüssigkeit um den Verschlussschieber 103 herum und durch den Ausgiesskanal 101 ausfliessen kann.

Der Deckel 5 ist hohl ausgebildet und besteht aus einem Deckelunterteil 113 und einem Deckeloberteil 114, die, wie bei 115 dargestellt, miteinander dichtend verrastbar sind.

Der Verschlussschieber 103 durchfasst mit einem mittigen Schaft 116 das Deckelunterteil 113 in einem Führungsloch 117, hinter dem ein den Schaft 116 umschliessender Dichtungsring 118 angeordnet ist, der den Hohlraum abdichtet.

Das freie Ende des Schaftes 116 wirkt mit einem sich diametral im Hohlraum erstreckenden, einarmigen Hebel 119 zusammen, der am seinem einen Ende in einem Gelenk 121 vertikal schwenkbar gelagert ist und an seinem anderen Ende mit der Handhabe 104 verbunden ist. Das freie Ende des Schaftes 116 ist am Hebel 119 geführt, und zwar in Form eines Spurlagers. Hierzu fasst ein kegelförmiger Ansatz 122 am Hebel 119 in eine entsprechend geformte stirnseitige Ausnehmung im Schaft 116. Es ist auch eine umgekehrte Anordnung denkbar.

Das Gelenk 121 wird durch sich in Lagerwangen 123 quer zur Hauptbelastungsrichtung (Schliessrichtung 106) erstreckende Schlitze 124 gebildet, in die eine Achse 125 am Hebel 119 einklipsbar ist.

Die Handhabe 104 wird durch einen von oben gesehen bevorzugt runden Stössel 126 gebildet, der im Deckeloberteil 114 beispielsweise in einer Einziehung 127 vertikal geführt ist. Der Stössel 126 steht mittels eines gabelförmigen Anschlussstücks 128 mit dem freien Ende des Hebels 119 in Verbindung, wobei das Anschlussstück 128 den Hebel 119 umgreift. Im Bereich der Handhabe 104 ist der Hohlraum des Deckels 5 durch eine elastische Dichthaube 129 abgedichtet, die dichtend in einer Ringnut des Deckeloberteils 114 eingesetzt ist oder auch auf eine andere Weise am Deckeloberteil 114 befestigt sein kann. Die Dichtungshaube 129 besteht bevorzugt aus Kunststoff. Die Dichthaube 129 oder der Stössel 126, wenn die Dichthaube 129 durchsichtig ist, bestehen in bevorzugter Ausgestaltung aus einer sich von der Farbe des Deckels 5 unterscheidenden, bevorzugt roten Farbe.

Der Verschlussschieber 103 ist durch eine Druckfeder 131 in Schliessrichtung 106 vorgespannt. Die Druckfeder 131 ist auf dem Schaft 116 angeordnet, am unteren Ende mittels einer Scheibe 132 am Deckelunterteil 113 und am oberen Ende an einer Schulter 133 abgestützt, die am Schaft 116 in nicht dargestellter Weise befestigt ist. Aufgrund der Vorspannkraft der Druckfeder 131 wird der Verschlussschieber 103 gegen die Dichtungsfläche 109 vorgespannt. Infolgedessen sind auch der Hebel 119 und der Stössel 126 durch die Kraft der Druckfeder 131 in ihrer Schliessstellung gehalten.

Zum Öffnen des Ausgiesskanals 101 wird der Stössel 126, der sich in einem Fingerabstand e vom Henkel 4 befindet, mittels eines Fingers, beispielsweise des Daumens der die Isolierkanne 1 tragenden Hand heruntergedrückt, wodurch der Hebel 119 nach unten geschwenkt wird und dabei den Verschlussschieber 103 nach unten in die Öffnungsstellung schiebt.

Es ist von Vorteil, dem Stössel 126 in seiner Öffnungsstellung eine nicht dargestellte Verrastung zuzuordnen, die durch einen erneuten Druck auf den Stössel 126, etwa im Sinne eines Druckstiftmechanismus (für z.B. Kugelschreiber), lösbar ist. Bei einer solchen Ausgestaltung kann der Verschlussschieber 103 in seiner Offenstellung belassen werden, ohne dass es eines anhaltenden Drucks auf den Stössel 126 bedarf. Erst durch erneute Betätigung des Stössels 126 kann der Verschlussschieber 103 und somit der Ausgiesskanal 101 wieder geschlossen werden.

Von Bedeutung ist auch die Dichtungsanordnung im Bereich des Dichtungsringes 118. Aufgrund der Tatsache, dass die Druckfeder 131 den Dichtungsring 118 belastet, wird dieser zusammengedrückt, was zu einer Verringerung seines Innendurchmessers führt und somit zu einer festeren Umschliessung des Schaftes 116. Dieser Dichtungseffekt wird dadurch erhöht, dass der Dichtungsring 118 von einem Ringansatz 134 am Deckelunterteil 113 umgeben ist, wobei die Höhe h des Ringansatzes 134 kleiner bemessen ist, als die Dicke des unbelasteten Dichtungsringes 118. Der Dichtungsring 118 kann sich somit nur nach innen ausdehnen.

In der Fig. 7 ist eine Alternative einer Dichtungsanordnung für die Abdichtung des Ausgiesskanals 101 dargestellt. Hier ist eine flache Ringdichtung 141 vorgesehen. Damit diese mit der Dichtungsfläche 109 zusammenwirken kann, ist der Verschlussschieber 103 bei 142 ausgespart.

Damit beim Ausgiessen Luft in den Kanneninnenraum gesaugt werden kann, ist ein Belüftungskanal 143 vorgesehen, der auf der der Mündung des Ausgiesskanals 101 entgegengesetzten Seite des Deckels 5 mündet. Die äussere Mündung 144 des Belüftungskanals 143 befindet sich im Bereich der Fassung 145. Hier ist die Mündung 144 nicht sichtbar und vor grober Verschmutzung geschützt.

Es ist noch anzuführen, dass im Innenraum der Isolierkanne 1 befindlicher Dampfdruck die Schliesswirkung des Verschlussschiebers 103 unterstützt, weil die Schliessrichtung 106 aufwärts gerichtet ist.

**Patentansprüche**

1. Isolierkanne (1) mit einem einen Henkel (4) aufweisenden Gehäuse (12) mit einem aus einem Ober- und Unterteil (41, 42; 113, 114) bestehenden, lösbar angeordneten Deckel (5) und mit einer Öffnung (6; 108) zum Ausgiessen, die durch einen im Deckel (5) verstellbar gelagerten Verschlussschieber (9, 103) verschliessbar ist, der durch einen durch den Deckel (5) hindurchgeführten Verstellmechanismus (11; 61; 105) mit einer Handhabe (38; 88; 104) zwischen einer Schliessstellung und einer Offenstellung vertikal verschiebbar ist, dadurch gekennzeichnet, dass der Verschlussschieber (9; 103) durch die Kraft einer Feder (18; 131) in Richtung (30; 106) auf die Schliessstellung vorgespannt und in der Offenstellung entgegen der Kraft der Feder (18; 131) durch den Verstellmechanismus (11; 61; 105) haltbar ist, dass die Handhabe (38; 88; 104) des Verstellmechanismus (11; 61; 105) durch die Feder (18; 131) automatisch in ihre Schliessstellung rückstellbar ist, dass der Verstellmechanismus (11; 61; 105) einen mittelbar oder unmittelbar am Verschlussschieber (9; 103) angreifenden, mit der Feder (18; 131) im Hohlraum zwischen dem Oberteil (41; 114) und dem Unterteil (42; 113) des Deckels (5) angeordneten, schwenkbar gelagerten Hebel (33; 62; 119) aufweist, und dass die Handhabe (38; 88; 104) bis in den Fingerabstandsbereich am Henkel (4) reicht.

2. Isolierkanne nach Anspruch 1, dadurch gekennzeichnet, dass der Verschlussschieber (9; 103) einen den Boden des Deckels (5) durchfassenden Schaft (15, 16; 116) aufweist, und der Verschlussschieber (9; 103) an der Unterseite des Deckels (5) angeordnet und durch die Feder (18; 131) abwärts vorgespannt ist.

3. Isolierkanne nach Anspruch 1, dadurch gekennzeichnet, dass der Verschlussschieber (9; 103) mit einem Ausgiesskanal (101) zusammenwirkt, der sich im Deckel (5) von dessen Unterseite (102) zu dessen dem Ausgiesser (3) zugewandten Seite erstreckt.

4. Isolierkanne nach Anspruch 3, dadurch gekennzeichnet, dass der Verschlussschieber (9; 103) einen den Boden des Deckels (5) durchfassenden Schaft (15, 16; 116) aufweist, der Verschlussschieber (103) an der Unterseite (102) des Deckels (5) angeordnet ist und die Schliessbewegung (106) aufwärts gerichtet ist.

5. Isolierkanne nach einem der Ansprüche 1 bis 5, dadurch gekennzeichnet, dass die Handhabe (38; 88) des Verstellmechanismus (11; 61) seitlich aus dem Deckel (5) herausgeführt ist.

6. Isolierkanne nach Anspruch 5, dadurch gekennzeichnet, dass die Handhabe (104) durch eine Öffnung an der Oberseite des Deckels (5) herausgeführt ist, die auf der dem Ausgiesskanal (101) oder dem Ausgiesser (3) gegenüberliegenden Seite des Deckels (5) angeordnet ist.

7. Isolierkanne nach einem der Ansprüche 1 bis 6, dadurch gekennzeichnet, dass der Hebel (33) ein zweiarmiger Hebel ist, dessen kurzer Hebelarm (35) mittelbar oder unmittelbar am Verschlussschieber (9) angreift.

8. Isolierkanne nach einem der Ansprüche 1 bis 6, dadurch gekennzeichnet, dass der Hebel (62) mit dem inneren Hebelarm (74) eines zweiarmigen Hebels (63) zusammenwirkt, der in Umfangsnähe am Deckel (5) gelagert ist, der die Durchführung (81, 82) durchfasst und dessen äusserer Hebelarm (87) die Handhabe (88) bildet.

9. Isolierkanne nach einem der Ansprüche 1 bis 8, dadurch gekennzeichnet, dass der Deckel (5) ein Schraubdeckel ist und der Verschlussschieber (9; 103) um seine Achse drehbar im Deckel (5) gelagert ist.

10. Isolierkanne nach einem der Ansprüche 2 bis 9, dadurch gekennzeichnet, dass der Schaft (15, 16; 116) im Deckel (5) bzw. im oder am Deckelunterteil (42; 113) durch eine elastische Ringdichtung (26; 118) umschlossen ist, auf der die Feder (18; 131) mittels eines Stützringes (25; 132) abgestützt ist.

11. Isolierkanne nach einem der Ansprüche 1 bis 10, dadurch gekennzeichnet, dass die Handhabe (38; 88; 104) im Bereich der Deckel-Durchführung (37; 82; 127) abgedichtet ist.

**Claims**

1. An insulating jug (1) having a housing (12) with a handle (4) and a detachably arranged cap (5) consisting of a top and a bottom part (41, 42; 113, 114) and a pouring opening (6; 108) closable by a closure member (9, 103) displaceably positioned in the cap (5), said closure member (9, 103) being movable vertically between a closed and an open position by a displacement mechanism (11; 61; 105) with an operating member (38; 88; 104) extending through the cap, characterized in that the closure member (9; 103) is pre-tensioned in the direction (30; 106) of the closed position by the force of a spring (18; 131) and can be retained in the open position against the force of the spring (18; 131) by the displacement mechanism (11; 61; 105); that the operating member (38; 88; 104) of the displacement mechanism (11; 61; 105) can be restored automatically to its closed position by the spring (18; 131); that the operating member (11; 61; 105) has a pivotally mounted lever (33; 62; 119) which acts indirectly or directly on the closure member (9; 103) and which is arranged with the spring (18; 131) in the hollow space between the top part (41; 114) and the bottom part (42; 113) of the cap (5); and that the operating member (38; 88; 104) extends to within finger reach of the handle (4).

2. An insulating jug according to claim 1, characterized in that the closure member (9; 103) has a stem (15; 16; 116) which passes through the bottom of the cap (5), and that the closure member (9; 103) is situated on the underside of the cap (5) and is pre-tensioned downwardly by the spring (18; 131).

3. An insulating jug according to claim 1, characterized in that the closure member (9; 103) cooperates with a pouring channel (101) which extends in the cap (5) from the underside (102) of the cap (5) to the side facing the pourer (3).

4. An insulating jug according to claim 3, characterized in that the closure member (9; 103) has a stem (15; 16; 116) which passes through the bottom of the cap (5), the closure member (103) is arranged on the underside (102) of the cap (5) and the closure movement (106) is directed upwards.

5. An insulating jug according to anyone of claims 1 to 4, characterized in that the operating member (38; 88) of the displacement mechanism (11; 61) is brought out sideways from the cap (5).

6. An insulating jug according to claim 5, characterized in that the operating member (104) is brought out through an opening on the upper side of the cap (5), said opening being situated on the side of the cap (5) opposite the pouring channel (101) or the pourer (3).

7. An insulating jug according to anyone of claims 1 to 6, characterized in that the lever (33) has two arms, the shorter arm (35) of which acts indirectly or directly on the closure member (9).

8. An insulating jug according to anyone of claims 1 to 6, characterized in that the lever (62) cooperates with the inner arm (74) of a two-armed lever (63) mounted near the perimeter of the cap (5) which passes through the aperture (81, 82) and whose outer arm (87) forms the operating member (88).

9. An insulating jug according to anyone of claims 1 to 8, characterized in that the cap (5) is a screw cap and the closure member (9; 103) is mounted rotatably about its axis in the cap (5).

10. An insulating jug according to anyone of claims 2 to 9, characterized in that the stem (15; 16; 116) is enclosed in the cap (5) or in or on the lower part (42; 113) of the cap (5) by an elastic ring seal (26; 118) on which the spring (18; 131) abuts via an abutment ring (25; 132).

11. An insulating jug according to anyone of claims 1 to 10, characterized in that the operating member (38; 88; 104) is sealed in the area of the cap aperture (37; 82; 127).

## Revendications

1. Récipient isolant (1), comportant une gaine (2) avec une poignée (4), un couvercle amovible (5), comprenant un dessus et un dessous (41, 42; 113, 114) et une ouverture (6; 108) qui sert à verser le contenu du récipient, cette ouverture pouvant être fermée par une valve (9, 103), qui est montée déplaçable dans le couvercle (5), la valve pouvant être déplacée verticalement entre une position de fermeture et une position d'ouverture avec un élément de commande (38; 88; 104), par un mécanisme (11; 61; 105) traversant le couvercle (5), caractérisé en ce que la valve (9; 103) est préchargée par l'effort d'un ressort (18; 131) dans le sens (30; 106) de sa position de fermeture et qu'elle peut être maintenue dans sa position d'ouverture contre l'effort du ressort (18; 131) par le mécanisme (11; 61; 105); en ce que l'élément de commande (38; 88; 104) du mécanisme (11; 61; 105) peut être rappelé automatiquement dans sa position de fermeture par le ressort (18; 131); en ce que le mécanisme (11; 61; 105) comporte un levier pivotant (33; 62; 119), qui attaque indirectement ou directement la valve (9; 103) et est disposé avec le ressort (18; 131), dans l'espace creux compris entre le dessus (41; 114) et le dessous (42; 113) du couvercle (5) et en ce que l'élément de commande (38; 88; 104) s'étend jusqu'à une distance de la poignée (4) qui correspond à la longueur d'un doigt.

2. Récipient isolant suivant la revendication 1, caractérisé en ce que la valve (9; 103) présente une tige (15, 16; 116) qui traverse le fond du couvercle (5), en ce que la valve (9; 103) est placée sur le dessous du couvercle (5) et en ce qu'elle est préchargée vers le bas par le ressort (18; 131).

3. Récipient isolant suivant la revendication 1, caractérisé en ce que la valve (9; 103) coopère avec un canal d'écoulement (101), qui s'étend, dans le couvercle (5), depuis le dessous (102) de celui-ci jusqu'à son côté qui est tourné vers le bec (3).

4. Récipient isolant suivant la revendication 3, caractérisé en ce que la valve (9; 103) présente une tige (15, 16; 116) traversant le fond du couvercle (5); en ce que la valve (103) est disposée sur le dessous (102) du couvercle (5) et en ce que le mouvement de fermeture (106) est dirigé vers le haut.

5. Récipient isolant suivant une des revendications 1 à 4, caractérisé en ce que l'élément de commande (38; 88) du mécanisme de commande (11; 61) sort latéralement du couvercle (5).

6. Récipient isolant suivant la revendication 5, caractérisé en ce que l'élément de commande (104) sort par une ouverture prévue sur le dessus du couvercle (5) et placée sur le côté de ce couvercle (5) opposé au canal d'écoulement (101) ou au bec (3).

7. Récipient isolant suivant les revendications 1 à 6, caractérisé en ce que le levier (33) est un levier à deux bras, dont le bras court (35) attaque indirectement ou directement la valve (9).

8. Récipient isolant suivant les revendications 1 à 6, caractérisé en ce que le levier (62) coopère avec le bras intérieur (74) d'un levier (63) à deux bras, qui est logé sur le couvercle (5) et près de son pourtour, traverse une traversée (81, 82) et dont le bras extérieur (87) forme l'élément de commande (88).

9. Récipient isolant suivant les revendications 1 à 8, caractérisé en ce que le couvercle (5) est fileté et que la valve (9; 103) peut tourner autour de son axe, dans le couvercle (5).

10. Récipient isolant suivant une des revendications 2 à 9, caractérisé en ce que la tige (15, 16; 116), qui est dans le couvercle (5) et/ou dans ou sur le dessous (42; 113) de ce couvercle est entourée par un joint annulaire élastique (26; 118), sur lequel s'appuie le ressort (18; 131) au moyen d'une bague d'appui (25; 132).

11. Récipient isolant suivant l'une quelconque des revendications 1 à 10, caractérisé en ce que l'élément de commande (38; 88; 104) est étanche dans la zone de la traversée (37; 82; 127) du couvercle.

# FIG.1

0 144 819

FIG.2

FIG.4

FIG.3

11

FIG.5

FIG.6

FIG.7